# FASCICULE DE BREVET EUROPEEN

(11) **EP 4 345 446 B1**
(45) Date de publication et mention de la délivrance du brevet: **21.05.2025**
(21) Numéro de dépôt: 23200445.7
(22) Date de dépôt: 28.09.2023
(51) Int. Cl.: G01N 21/47, G01N 21/31, G01N 21/3563, F21V 8/00

(54) **DISPOSITIF D'IMAGERIE MULTISPECTRALE EN REFLEXION**
MULTISPEKTRALE REFLEXIONSBILDGEBUNGSVORRICHTUNG
DEVICE FOR MULTISPECTRAL IMAGING IN REFLECTION

(30) Priorité: 30.09.2022 FR 2210015
(43) Date de publication de la demande: 03.04.2024
(73) Titulaire: Commissariat à l'Energie Atomique et aux Energies Alternatives, 75015 Paris (FR)
(72) Inventeur: LE PERCHEC, Jérôme, 38054 Grenoble cedex 09 (FR); DUPOY, Mathieu, 38054 Grenoble Cedex 09 (FR)
(74) Mandataire: Brevalex

(56) Documents cités:
- EP-A1- 4 173 573
- WO-A1-2015/167492
- WO-A1-2022/030116
- US-A1- 2012 127 573
- US-A1- 2013 286 678
- US-A1- 2021 271 845

## Description

### Domaine technique

L'invention concerne le domaine de l'imagerie, en particulier l'imagerie multispectrale en réflexion, dans le domaine visible et/ou infrarouge (IR). L'invention peut avantageusement être utilisée pour l'analyse de micro-organismes, de cellules, de tissus biologiques, ou encore pour le diagnostic de maladies.

### État de la technique antérieure

Afin d'obtenir une image d'un échantillon biologique à analyser, une solution consiste à cartographier l'échantillon via un microscope associé à une source IR polychromatique et un spectromètre IR à transformée de Fourier, ou FTIR (« Fourier-transform infrared spectroscopy » en anglais). Un tel système permet de scanner l'échantillon et d'obtenir des images multispectrales de l'échantillon. Un inconvénient de ce type de solution est que l'analyse d'une surface d'échantillon de quelques cm² est longue en raison des millions de spectres obtenus et des ensembles de données volumineux à traiter qui en découlent. Un tel système est en outre complexe, cher et encombrant.

L'émergence des lasers à cascade quantique, ou QCL (acronyme de « Quantum Cascade Laser » en anglais), permet de réaliser une pluralité de sources IR monochromatiques couvrant ensemble le domaine spectral d'une source IR polychromatique. Avec de telles sources lumineuses laser, il n'est plus nécessaire d'utiliser un spectromètre FTIR pour analyser spectralement la lumière ayant interagie avec l'échantillon. Un détecteur sensible dans l'IR suffit à quantifier l'intensité de la lumière transmise ou diffusée par l'échantillon, pour chacune des longueurs d'onde choisies comme étant pertinentes pour l'analyse.

Une autre contrainte est que l'imagerie IR multispectrale développée en transmission ne permet pas de cartographier biochimiquement des échantillons épais, du fait notamment de la forte absorption lumineuse par l'eau présente dans les échantillons biologiques. Afin de s'affranchir de cette absorption, la spectrométrie IR en réflexion s'est développée en utilisant le phénomène de réflexion totale atténuée, ou ATR (« Attenuated Total Reflectance » en anglais). Cela nécessite de disposer le système de mesure au plus près de l'échantillon. Cette méthode présente toutefois deux inconvénients majeurs :
- la faible pénétration des ondes évanescentes dans l'échantillon, nécessitant une disposition de l'échantillon au plus près du système de mesure ;
- le faible champ objet imagé.

Pour pallier à ces inconvénients, le document FR 3 110 979 A1 propose une puce dotée d'une matrice de réseaux déflecteurs. Ce type de puce présente toutefois les inconvénients suivants :
- bande spectrale limitée ;
- réalisation complexe des réseaux déflecteurs ;
- masquage des bolomètres disposés sous les réseaux déflecteurs.

Une solution alternative est décrite dans le document EP 3 916 441 A1 qui propose de réaliser une puce à partir d'un substrat de silicium gravé pour permettre l'entrée d'un faisceau laser depuis la face du substrat se trouvant du côté de la matrice de bolomètres servant de capteur. Cette puce présente toutefois les inconvénients suivants :
- encombrement important ;
- absorption trop importante de la lumière par le silicium ;
- complexité pour injecter la lumière dans la puce.

Une solution alternative décrite dans US 2021/271845 A1 utilise un guide d'onde configuré pour fournir un rétro-éclairage permettant de collecter la lumière rétro-diffusée par un échantillon vers un imageur.

### EXPOSÉ DE L'INVENTION

Un but de la présente invention est de proposer un dispositif d'imagerie multispectrale en réflexion doté d'un système optique ne présentant pas les inconvénients décrits ci-dessus.

Pour cela, la présente invention propose un dispositif d'imagerie configuré pour imager un échantillon, comprenant au moins :
- une première source lumineuse configurée pour émettre une lumière ;
- un dispositif de déflection lumineuse configuré pour défléchir la lumière destinée à être émise par la première source lumineuse vers l'échantillon, comprenant une portion de matériau dotée d'une première face principale destinée à être disposée en regard de l'échantillon, d'une deuxième face principale opposée à la première face principale, et d'une première face latérale vers laquelle la lumière est destinée à être émise par la première source lumineuse ;
   l'une des première et deuxième faces principales étant dotée de parties obliques vis-à-vis de l'autre des première et deuxième faces principales et chacune configurée pour défléchir une partie de la lumière reçue vers l'échantillon, et de parties planes parallèles à l'autre des première et deuxièmes faces principales et configurées pour laisser passer la lumière rétrodiffusée par l'échantillon ;
- un imageur comprenant une pluralité de pixels et présentant une face de détection disposée en regard de la deuxième face principale du dispositif de déflection lumineuse et destinée à recevoir la lumière rétrodiffusée par l'échantillon ;
caractérisé en ce que chaque pixel de l'imageur est disposé en regard d'une des parties planes de ladite une des première et deuxième faces principales.

Dans ce dispositif d'imagerie, la lumière est tout d'abord émise au moins par la première source lumineuse du côté de la première face latérale de la portion de matériau du dispositif de déflection lumineuse. Cette lumière est ensuite défléchie par les parties obliques de l'une des première et deuxième faces principales (qui correspondent aux deux faces de plus grandes dimensions) de la portion de matériau vers l'échantillon. Après avoir atteint l'échantillon et interagi avec celui-ci, la lumière est rétrodiffusée par l'échantillon, traverse la portion de matériau en passant par les parties planes de l'une des première et deuxième faces principales et par l'autre des première et deuxième faces principales de la portion de matériau, puis est captée par l'imageur afin d'obtenir une image de l'échantillon aux longueurs d'onde de la lumière émise par la première source lumineuse.

Contrairement au dispositif d'imagerie doté d'une matrice de réseaux déflecteurs, le dispositif d'imagerie proposé ici fait appel à un dispositif de déflection lumineuse moins complexe à réaliser et adapté pour défléchir de la lumière sur une plus grande bande spectrale du fait que la déflexion lumineuse se produit grâce à la géométrie de la portion de matériau du dispositif de déflection lumineuse, à savoir les parties obliques de la portion de matériau.

En outre, la structure formée par la succession de parties obliques et de parties planes sur l'une des faces principales du dispositif de déflection lumineuse peut être aisément réalisée avec un encombrement réduit, sans absorption importante de la lumière. De plus, la déflection lumineuse est obtenue en illuminant simplement latéralement le dispositif de déflection lumineuse.

Avec le dispositif d'imagerie proposé, les avantages ci-dessus sont obtenus tout en conservant un grand champ de vue et une résolution spatiale correspondante à la résolution de l'imageur.

Avec le dispositif d'imagerie proposé, il est par exemple possible de guider et multiplexer des longueurs d'onde du domaine moyen infrarouge (MIR) comprise entre 5 µm et 10 µm, ou entre 6 µm à 9 µm, soit environ une largeur de gamme de 1000 cm⁻¹ en nombre d'ondes. Cela représente un gros avantage par rapport aux guides optiques qui sont généralement dimensionnés pour être monomode afin de réaliser leurs fonctions. Par exemple, les multiplexeurs usuels de type « Array Waveguide Gratings », ou AWG, couvrent une gamme spectrale d'utilisation de seulement une centaine de cm⁻¹ en termes de nombre d'ondes.

Le dispositif d'imagerie proposé permet également d'éclairer de façon homogène une zone de surface supérieure à 2,5 mm², par exemple de l'ordre de 3 x 3 mm², et de pouvoir collecter les photons réfléchis par l'objet sur une telle surface.

Le dispositif d'imagerie peut être réalisé sous la forme d'un circuit intégré photonique, ou PIC (« Photonic Integrated Circuit » en anglais) dans lequel le dispositif de déflection lumineuse envoie la lumière sur l'échantillon et non sur l'imageur.

Un autre avantage est que ce dispositif d'imagerie est stable thermiquement.

Dans le dispositif d'imagerie proposé, le dispositif de déflection lumineuse est inséré entre l'imageur matriciel et l'échantillon. Le dispositif de déflection lumineuse sert de déflecteur vis-à-vis de la lumière reçue latéralement et émise depuis au moins la première source lumineuse, et sert également de répartiteur de flux optique vis-à-vis de la lumière rétrodiffusée par l'échantillon.

Le dispositif de déflection lumineuse a une forme globalement planaire et l'une de ses faces principales est structurée en escalier ou en échelons. Par « structuration en escalier », on entend qu'une des faces principales du dispositif de déflection lumineuse possède une succession de marches à flancs obliques qui redirigent chacune une certaine fraction de flux incident vers l'échantillon. Le dispositif de déflection lumineuse peut être vu comme formant un miroir parabolique « discrétisé ».

La taille et le nombre de marches chacune formée par une partie oblique et une partie plane voisines l'une de l'autre peuvent être déterminés en fonction de l'architecture de l'imageur (celui-ci pouvant comporter une matrice de photodétecteurs fonctionnant dans le domaine visible et/ou infrarouge, à base de semi-conducteurs ou à base de micro-bolomètres par exemple) et de l'homogénéité d'éclairage souhaitée pour l'échantillon analysé.

La portion de matériau du dispositif de déflection lumineuse comporte un matériau peu absorbant vis-à-vis de la gamme de longueurs d'onde de la lumière émise par la première source lumineuse. Par exemple, si la longueur de la portion de matériau est égale à 1 cm, pour avoir une atténuation lumineuse d'au plus 10 %, le matériau peut être choisi tel que la partie imaginaire de son indice optique soit inférieure à 10⁻⁴ en considérant des longueurs d'onde des domaines visible et infrarouge.

Chacune des première et deuxième faces principales de la portion de matériau du dispositif de déflection lumineuse peut avoir des dimensions de l'ordre d'un ou plusieurs mm², et l'épaisseur (dimension perpendiculaire à la face principale qui ne comporte pas les parties obliques) de la portion de matériau du dispositif de déflection lumineuse peut être égale à une ou plusieurs centaines de microns, ou inférieure à 1 mm. Une telle géométrie est bien adaptée au principe d'imagerie sans lentille dans laquelle le dispositif est très proche de l'échantillon imagé.

Le dispositif d'imagerie peut être configuré tel que l'imageur puisse être disposé à une distance de l'échantillon inférieure à 1 mm.

Chaque pixel de l'imageur comporte au moins un photodétecteur.

Chaque pixel de l'imageur est disposé en regard d'une des parties planes de ladite une des première et deuxième faces principales. La configuration est avantageuse car les parties planes font peu obstacle à la transmission du signal vers l'imageur.

Dans un premier mode de réalisation, le dispositif d'imagerie peut être tel que :
- ladite une des première et deuxième faces principales (celle dotée des parties obliques et des parties planes) correspond à la deuxième face principale (celle disposée en regard de l'imageur) ;
- la lumière destinée à être émise par la première source lumineuse est destinée à entrer dans la portion de matériau du dispositif de déflection lumineuse par la première face latérale ;
- la portion de matériau du dispositif de déflection lumineuse comporte un matériau dont l'indice de réfraction n1 est supérieur à l'indice de réfraction n2 du milieu dans lequel se trouve ladite portion de matériau.

Dans ce premier mode de réalisation, les parties obliques réalisent une déflection lumineuse par réflexion totale interne de la lumière entrée dans la portion de matériau du dispositif de déflection lumineuse, chaque partie oblique renvoyant une fraction du faisceau lumineux entré latéralement en direction de l'échantillon.

Dans ce premier mode de réalisation, le dispositif peut comporter en outre un collimateur interposé entre la première source lumineuse et la première face latérale du dispositif de déflection lumineuse. Ce collimateur permet de rendre homogène la lumière émise par la première source lumineuse le long de la section transverse du dispositif de déflection lumineuse, et ainsi permettre une déflection relativement uniformément du flux lumineux vers l'échantillon.

Dans un deuxième mode de réalisation, le dispositif d'imagerie peut être tel que :
- ladite une des première et deuxième faces principales (celle dotée des parties obliques et des parties planes) correspond à la première face principale (celle disposée en regard de l'imageur) ;
- la portion de matériau du dispositif de déflection lumineuse comporte un matériau dont l'indice de réfraction n1 est supérieur à l'indice de réfraction n2 du milieu dans lequel se trouve ladite portion de matériau ;
- les parties obliques de ladite une des première et deuxième faces principales sont recouvertes d'un matériau réfléchissant vis-à-vis de la lumière destinée à être émise par la première source lumineuse.

Dans ce deuxième mode de réalisation, la déflection lumineuse correspond à une réflexion externe se produisant en dehors de la portion de matériau, sur les parties obliques recouvertes du matériau réfléchissant. Un avantage de ce deuxième mode de réalisation est que le faisceau lumineux n'a pas à être envoyé dans la portion de matériau du dispositif de déflection lumineuse.

Le matériau réfléchissant peut être totalement réfléchissant, c'est-à-dire réfléchir la totalité de la lumière arrivant sur le matériau.

Selon un exemple de réalisation applicable au premier ou au deuxième mode de réalisation, les parties obliques de ladite une des première et deuxième faces principales peuvent former des bandes parallèles espacées les unes des autres par les parties planes. Selon un autre exemple de réalisation applicable au premier ou au deuxième mode de réalisation, les parties obliques peuvent être disposées en quinconce et espacées les unes des autres par les parties planes.

Selon un autre exemple de réalisation applicable au premier ou au deuxième mode de réalisation, les parties obliques peuvent former des cercles concentriques ou des rectangles concentriques espacés les uns des autres par les parties planes.

Le dispositif peut comporter en outre une deuxième source lumineuse configurée pour émettre une lumière similaire à celle émise par la première source lumineuse, dans lequel la portion de matériau est dotée d'une deuxième face latérale opposée à la première face latérale et vers laquelle la deuxième source lumineuse est destinée à émettre sa lumière, et dans lequel la portion de matériau est symétrique par rapport à un plan perpendiculaire à l'autre des première et deuxième faces principales. L'avantage d'une telle configuration (applicable au premier ou au deuxième mode de réalisation) est que pour une même surface des première et deuxième faces principales, l'épaisseur de la portion de matériau peut être réduite du fait que des parties obliques reflétant la lumière émise depuis la première source lumineuse se trouvent dans des plans similaires à des parties obliques reflétant la lumière émise depuis la deuxième source lumineuse, ces plans étant parallèles à l'autre des première et deuxième faces principales.

La portion de matériau peut comporter au moins l'un des matériaux suivants, qui sont notamment adaptés pour l'infrarouge : germanium, silicium non dopé, ZnSe, ZnS, verre de chalcogénure, CaF₂.

Les parties planes de ladite une des première et deuxième faces principales et/ou l'autre des première et deuxième faces principales peuvent être recouvertes d'un matériau antireflet. Cette configuration permet d'améliorer la transmission lumineuse de la lumière rétrodiffusée par l'échantillon vers l'imageur en évitant les réflexions lumineuses parasites liés aux sauts d'indice optique entre le matériau de la portion de matériau et le milieu dans lequel se trouve la portion de matériau, sur le trajet de la lumière allant de l'échantillon à l'imageur. Cette configuration améliore au final l'efficacité du dispositif.

Dans une configuration particulière, les parties obliques peuvent être courbées, ce qui peut permettre par exemple de défléchir la lumière sur un cône angulaire plus élargi que lorsque les parties obliques sont non courbées, et ainsi homogénéiser davantage l'éclairage de l'échantillon.

La première source lumineuse peut être configurée pour émettre une lumière comprenant plusieurs longueurs d'onde du domaine visible et/ou infrarouge.

L'invention concerne également un procédé de réalisation d'un dispositif d'imagerie configuré pour imager un échantillon, comprenant au moins :
- fourniture d'une première source lumineuse configurée pour émettre une lumière ;
- réalisation d'un dispositif de déflection lumineuse configuré pour défléchir la lumière destinée à être émise par la première source lumineuse vers l'échantillon, comprenant une portion de matériau doté d'une première face principale destinée à être disposée en regard de l'échantillon, d'une deuxième face principale opposée à la première face principale, et d'une première face latérale vers laquelle la lumière est destinée à être émise par la première source lumineuse ;
   la réalisation du dispositif de déflection lumineuse incluant la réalisation, au niveau de l'une des première et deuxième faces principales, de parties obliques vis-à-vis de l'autre des première et deuxième faces principales et chacune configurée pour défléchir une partie de la lumière reçue vers l'échantillon, et de parties planes parallèles à l'autre des première et deuxièmes faces principales et configurées pour laisser passer la lumière rétrodiffusée par l'échantillon ;
- fourniture d'un imageur comprenant une pluralité de pixels et présentant une face de détection disposée en regard de la deuxième face principale et destinée à recevoir la lumière rétrodiffusée par l'échantillon ;
caractérisé en ce que chaque pixel de l'imageur est disposé en regard d'une des parties planes de ladite une des première et deuxième faces principales.

La réalisation des parties obliques et des parties planes de la portion de matériau du dispositif de déflection lumineuse peut comporter la mise en œuvre d'une gravure par laser de la portion de matériau.

Dans l'ensemble du document, le terme « sur » est utilisé sans distinction de l'orientation dans l'espace de l'élément auquel se rapporte ce terme. Par exemple, dans la caractéristique « sur une face », cette face n'est pas nécessairement orientée vers le haut mais peut correspondre à une face orientée selon n'importe quelle direction. En outre, la disposition d'un premier élément sur un deuxième élément doit être comprise comme pouvant correspondre à la disposition du premier élément directement contre le deuxième élément, sans aucun élément intermédiaire entre les premier et deuxième éléments, ou bien comme pouvant correspondre à la disposition du premier élément sur le deuxième élément avec un ou plusieurs éléments intermédiaires disposés entre les premier et deuxième éléments.

### BRÈVE DESCRIPTION DES DESSINS

La présente invention sera mieux comprise à la lecture de la description d'exemples de réalisation donnés à titre purement indicatif et nullement limitatif en faisant référence aux dessins annexés sur lesquels :
[Fig. 1] représente schématiquement un dispositif d'imagerie, objet de la présente invention, selon un premier mode de réalisation ;
[Fig. 2] représente schématiquement, en vue de dessus, le dispositif d'imagerie, objet de la présente invention, selon le premier mode de réalisation ;
[Fig. 3] représente schématiquement une partie d'un dispositif d'imagerie, objet de la présente invention, selon un deuxième mode de réalisation ;
[Fig. 4]
[Fig. 5]

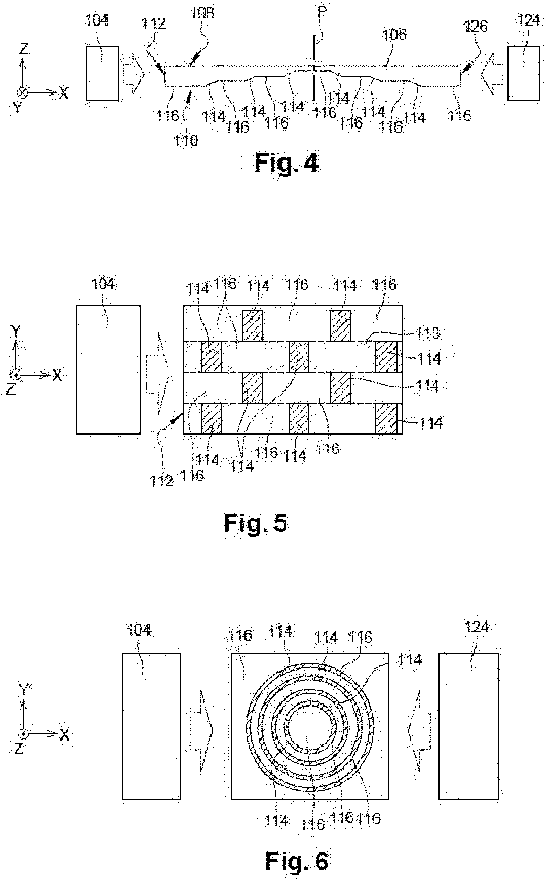

[Fig. 6], et

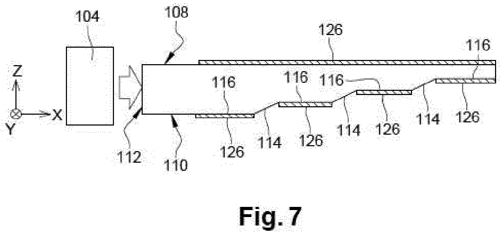

[Fig. 7] représentent schématiquement une partie d'un dispositif d'imagerie, objet de la présente invention, selon différentes variantes.

Des parties identiques, similaires ou équivalentes des différentes figures décrites ci-après portent les mêmes références numériques de façon à faciliter le passage d'une figure à l'autre.

Les différentes parties représentées sur les figures ne le sont pas nécessairement selon une échelle uniforme, pour rendre les figures plus lisibles.

Les différentes possibilités (variantes et modes de réalisation) doivent être comprises comme n'étant pas exclusives les unes des autres et peuvent se combiner entre elles.

### Exposé détaillé de modes de réalisation particuliers

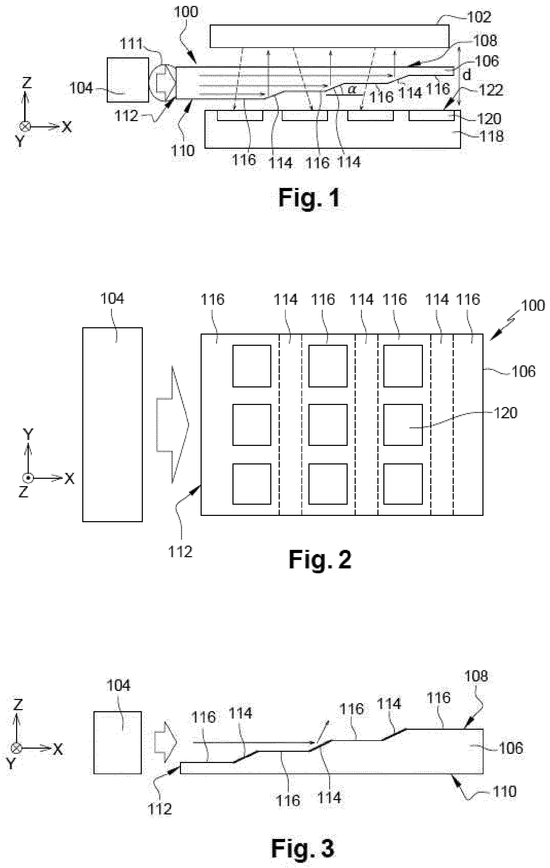

Un dispositif d'imagerie 100 selon un premier mode de réalisation et configuré pour imager un échantillon 102, par exemple un tissu biologique tel que de la peau, est décrit ci-dessous en lien avec les figures 1 et 2.

Le dispositif 100 comprend au moins une première source lumineuse 104 configurée pour émettre une lumière. Dans l'exemple décrit ici, la lumière émise par la première source lumineuse 104 comprend plusieurs longueurs d'onde du domaine visible et/ou infrarouge. De manière avantageuse, la première source lumineuse 104 est apte à émettre une lumière comprenant des longueurs d'onde du domaine moyen infrarouge (MIR), couvrant notamment une gamme de longueurs d'onde comprises entre 5 µm et 10 µm, ou entre 6 µm et 9 µm. De plus, selon une réalisation avantageuse, la première source lumineuse 104 peut comporter au moins un élément émissif laser de type QCL.

Le dispositif 100 comporte également un dispositif de déflection lumineuse configuré pour défléchir la lumière destinée à être émise par la première source lumineuse 104 vers l'échantillon 102. Le dispositif de déflection lumineuse comprend une portion 106 de matériau dotée d'une première face principale 108 destinée à être disposée en regard de l'échantillon 102, d'une deuxième face principale 110 opposée à la première face principale 108, et d'une première face latérale 112 vers laquelle la lumière est destinée à être émise par la première source lumineuse 104. Le matériau de la portion 106 est tel qu'il n'absorbe pas ou peu la lumière à l'échelle de la portion 106 (qui peut être de plusieurs mm dans le sens longitudinal, c'est-à-dire selon l'axe X ou Y visible sur la figure 1). Par exemple, lorsque le dispositif 100 comporte une première source lumineuse 104 émettant une lumière du domaine de l'infrarouge, le matériau de la portion 106 correspond par exemple à du germanium, du silicium non dopé, du ZnSe, du ZnS, du verre de chalcogénure, du CaF₂, etc.

L'une des première et deuxième faces principales 108, 110 de la portion 106 est dotée de parties obliques 114 chacune configurée pour défléchir une partie de la lumière reçue vers l'échantillon 102. Dans l'exemple de réalisation décrit en lien avec les figures 1 et 2, ladite une des première et deuxième faces principales 108, 110 correspond à la deuxième face principale 110. Comme cela est visible sur la figure 1, la lumière émise depuis la première source lumineuse 104 est représentée par une flèche et entre dans la portion 106 par la première face latérale 112. Cette lumière se propage dans toute l'épaisseur de la portion 106. Les rayons de cette lumière rencontrant les parties obliques 114 sont déviés de leur trajectoire, traversent la première face principale 108 et éclairent l'échantillon 102.

De manière avantageuse, la lumière émise par la première source lumineuse 104 reçue par la portion 106 à travers sa première face latérale 112 est collimatée afin qu'elle se propage selon une direction sensiblement parallèle à la première face principale 108. De plus, le flux lumineux entre de préférence dans la portion 106 manière homogène le long de la section transverse de la portion 106, c'est-à-dire sur l'ensemble de la première face latérale 112, afin d'obtenir une déflection relativement uniforme du flux lumineux vers l'échantillon 102. Une telle lumière collimatée se propageant de manière uniforme dans la portion 106 est par exemple obtenue en couplant optiquement la sortie de la source lumineuse 104 à la première face latérale 112 avec un collimateur 111, par exemple une lentille-boule.

Dans la configuration décrite ici, la déflection lumineuse par les parties obliques 114 est obtenue par réflexion totale interne, ce phénomène se produisant lorsque :
- la portion 116 comporte un matériau dont l'indice de réfraction n1 est supérieur à l'indice de réfraction n2 du milieu dans lequel se trouve la portion 116, ce milieu étant par exemple de l'air, et
- l'angle α, représenté sur la figure 1, formé par les parties obliques 114 vis-à-vis de la direction de propagation de la lumière entrant dans la portion 116 est tel que α < π/2-arcsin(n2/n1). Plus précisément, afin d'éviter également toute réflexion totale interne au niveau de la face 108, l'angle α respectera avantageusement la formule d'encadrement suivante : π/2-arcsin(n2/n1) < 2α < π/2+arcsin(n2/n1).

A titre d'exemple, le matériau de la portion 106 peut être choisi tel que son indice n1 soit supérieur à 2 ou 3. Ainsi, en considérant que le matériau de la portion 106 a un indice optique n1 = 3,5, et que la portion 106 est entourée d'air (indice optique n2 = 1), les parties obliques 114 sont formées telles que l'angle α obtenu soit inférieur à 73°, de préférence entre 37° et 53°. La valeur de cet angle α peut être choisie avantageusement comme étant égale ou proche de 45°, ce qui permet d'obtenir une déflection lumineuse qui soit sensiblement perpendiculaire à la surface de l'échantillon 102 destinée à être éclairée.

La face principale dotée des parties obliques 114, c'est-à-dire la deuxième face principale 110 dans le premier mode de réalisation, comporte également des parties planes 116 parallèles vis-à-vis de l'autre des première et deuxième faces principales 108, 110 (c'est-à-dire vis-à-vis de la première face principale 108 dans le premier mode de réalisation décrit ici) et configurées pour laisser passer de la lumière rétrodiffusée par l'échantillon 102. Sur l'exemple de la figure 1, cette lumière rétrodiffusée est représentée par des flèches en pointillés. Ainsi, cette lumière rétrodiffusée par l'échantillon 102 traverse la portion 106 en passant par la première face principale 108 et par les parties planes 116. La lumière rétrodiffusée arrivant sur les parties obliques 114 soit passe à travers les parties obliques 114, soit est réfléchie obliquement et repart dans le guide optique par réflexion interne, ou va re-éclairer en partie l'échantillon (cette part étant toutefois mineure vis-à-vis du flux d'éclairage global). Les parties planes 116 peuvent être vues comme réalisant une répartition du flux optique rétrodiffusé par l'échantillon 102.

La portion 106 a globalement une forme planaire s'étendant dans le plan (X, Y) visible sur les figures 1 et 2. Les parties obliques 114 et planes 116 forment une structuration en escalier (ou en échelons) de l'une des faces principales 108, 110 de la portion 106. Les parties planes 116 sont parallèles à la face principale opposée, ici la face 108.

Le dispositif 100 comporte en outre un imageur 118 configuré pour détecter la lumière après qu'elle ait été rétrodiffusée par l'échantillon 102 et qu'elle ait traversé la portion 106. L'imageur 118 comprend une pluralité de pixels 120 correspondant par exemple à des micro-bolomètres ou des photodétecteurs à base de semi-conducteur. Ces pixels 120 sont présents au niveau d'une face de détection 122 de l'imageur 118 qui est disposée en regard de la deuxième face principale 110 de la portion 106. Dans l'exemple de réalisation décrit ici, les pixels 120 sont répartis au niveau de la face de détection 122 de l'imageur 118 sous la forme d'une matrice. De plus, chaque pixel 120 de l'imageur 118 est avantageusement disposé en regard d'une des parties planes 116 afin que tous les pixels 120 reçoivent de la lumière rétrodiffusée par l'échantillon 102. A titre d'exemple, l'imageur 118 peut comporter une matrice de 80x80 pixels avec un pas de 34 µm (donc avec des pixels de côté égal à 24 µm, et des espaces inter-pixel chacun égal à 9 µm), soit une surface active de 2,7 x 2,7 mm².

Selon un exemple de réalisation du dispositif 100, les parties obliques 114 forment des bandes parallèles espacées les unes des autres par les parties planes 116. Une telle configuration est visible sur la figure 2 qui représente schématiquement une vue de dessus du dispositif 100. Sur cette figure 2, les pixels 120 de l'imageur 118 disposés sous la portion 106 sont représentés afin de mieux comprendre la disposition des parties obliques 114 et des parties planes 116 de la portion 106 vis-à-vis de ces pixels 120.

Lors de l'utilisation du dispositif 100, l'imageur 118 est avantageusement disposé à une distance d vis-à-vis de l'échantillon 102 qui est inférieure à 1 mm. L'épaisseur (dimension parallèle à l'axe Z sur les figures 1 et 2) de la portion 106 est donc avantageusement inférieure à cette dimension d, et donc inférieure à 1 mm. Par exemple en considérant l'exemple d'imageur 118 précédemment décrit, un déflecteur comprenant un flanc linéaire d'oblicité égale à 45° disposé en regard de chaque colonne inter-pixel peut avoir une épaisseur de l'ordre de 79 x 9 = 711 µm.

Dans l'exemple représenté sur les figures 1 et 2, seules trois parties obliques 114 sont représentées. Toutefois, la taille et le nombre de parties obliques 114 que comporte l'une des première et deuxième faces principales 108, 110 de la portion 106 est calibré en fonction de l'architecture de l'imageur 118 et de l'homogénéité d'éclairage souhaitée pour l'échantillon 102 analysé.

Un dispositif d'imagerie 100 selon un deuxième mode de réalisation est décrit ci-dessous en lien avec la figure 3.

Dans ce deuxième mode de réalisation, la face de la portion 106 comprenant les parties obliques 114 et les parties planes 116 correspond à la première face principale 108. La portion 106 comporte un matériau dont l'indice de réfraction n1 est supérieur à l'indice de réfraction n2 du milieu dans lequel se trouve la portion 106. Enfin, les parties obliques 114 sont recouvertes d'un matériau réfléchissant vis-à-vis de la lumière destinée à être émise par la source lumineuse 104, par exemple un matériau métallique.

Comme dans le premier mode de réalisation, chaque pixel 120 de l'imageur 118 est avantageusement disposé en regard d'une des parties planes 116 afin que tous les pixels 120 reçoivent de la lumière rétrodiffusée par l'échantillon 102.

Avec ce deuxième mode de réalisation, la déflection lumineuse par les parties obliques 114 est obtenue par réflexion sur la surface externe de la portion 106, et non par réflexion totale interne comme dans le premier mode de réalisation. Ainsi, le matériau de la portion 106 est choisi de préférence tel que son indice optique soit faible afin de transmettre au mieux la lumière rétrodiffusée par l'échantillon 102 vers l'imageur 118, et les parties obliques 114 sont recouvertes d'un matériau optiquement réfléchissant afin de réfléchir la lumière vers l'échantillon 102.

Les différents exemples et variantes précédemment décrites pour le premier mode de réalisation peuvent s'appliquer également au deuxième mode de réalisation.

Un dispositif d'imagerie 100 selon une variante du premier mode de réalisation est décrit ci-dessous en lien avec la figure 4.

Dans cette variante, le dispositif 100 comporte en outre une deuxième source lumineuse 124 configurée pour émettre une lumière similaire à celle émise par la première source lumineuse 104. La portion 106 est dotée d'une deuxième face latérale 126 opposée à la première face latérale 112 et vers laquelle la deuxième source lumineuse 124 est destinée à émettre sa lumière. En outre, la portion 106 est symétrique par rapport à un plan perpendiculaire à la première face principale 108 (plan P sur la figure 4). Un éclairage bilatéral de la portion 106 est réalisé par les première et deuxième sources lumineuses 104, 124. Cela a pour avantage, pour une même déflection lumineuse, de permettre à la portion 106 d'être réalisée avec une épaisseur réduite par rapport aux exemples précédemment décrits, et cela pour une même surface de déflection lumineuse.

Cette variante peut s'appliquer également au deuxième mode de réalisation précédemment décrit.

Dans les différentes réalisations précédemment décrites, les parties obliques 114 sont réalisées sous la forme de bandes parallèles espacées les unes des autres par les parties planes 116. En variante, les parties obliques 114 peuvent être disposées en quinconce et être espacées les unes des autres par les parties planes 116, comme représenté par exemple sur la figure 5. Dans cette variante, bien qu'une seule source lumineuse soit représentée sur la figure 5, il est possible que le dispositif 100 comporte la deuxième source lumineuse 124 et que la portion 106 soit symétrique par rapport à un plan perpendiculaire la première face principale 108. Cette variante peut s'appliquer au premier mode de réalisation ou au deuxième mode de réalisation.

Selon une autre variante, les parties obliques 114 peuvent former des cercles concentriques ou bien des rectangles concentriques espacés les uns des autres par les parties planes 116, comme représenté par exemple sur la figure 6 (sur cette figure, l'exemple représenté correspond à des cercles concentriques). Dans cette variante, bien que deux sources lumineuses 104, 124 soient représentées, il est possible que le dispositif 100 comporte un nombre différent de sources lumineuses, par exemple quatre sources lumineuses chacune éclairant une des quatre faces latérales de la portion 106. Cette variante peut s'appliquer au premier mode de réalisation ou au deuxième mode de réalisation.

Dans tous les modes de réalisation et toutes les variantes précédemment décrites, il est possible que les parties planes 116 et/ou la face principale ne comportant pas les parties obliques 114 soient recouvertes d'un matériau antireflet 126, par exemple du ZnS ou du SiN. Une telle configuration basée sur le premier mode de réalisation est par exemple représentée sur la figure 7. L'ajout de ce matériau antireflet 126 permet de réduire les phénomènes de réflexions parasites liés aux sauts d'indice optique, et améliore ainsi l'efficacité du dispositif 100.

Dans tous les modes de réalisation et variantes précédemment décrites, les parties obliques 114 peuvent être courbées.

Dans tous les modes de réalisation et variantes précédemment décrites, la portion de matériau 106 peut être réalisée par gravure, ou micro-usinage, laser. Cette technique permet de graver en profondeur, à façon, des motifs de taille latérale allant jusqu'à quelques microns, sur une très large variété de matériaux (métaux, verres, Si, saphir...), et sur des surfaces de plusieurs mm².

Il peut être envisagé de réaliser finement un moule de référence (par exemple métallique) par micro-usinage laser, qui sert ensuite à réaliser le négatif des motifs avec un matériau plus économique et/ou de plus faible indice optique telle qu'une résine (supposée transparente dans la bande spectrale d'intérêt), l'élément obtenu correspondant à l'élément 106.

En variante, il est possible que les parties obliques 114 et les parties planes 116 soient obtenues par des étapes successives de lithographie et de gravure, ou de lithographie par écriture laser directe.

Dans le deuxième mode de réalisation, le matériau réfléchissant formé sur les parties obliques 114 peut être obtenu par dépôt métallique, par exemple à travers une grille de masquage de sorte que seuls les flancs obliques soient recouverts par le matériau déposé. Par exemple, il est possible que la portion de matériau 106 soit positionnée dans un équipement de dépôt tel que qu'il reçoive un dépôt de métal envoyé latéralement, de sorte que le dépôt ne couvre alors quasiment que les parties obliques 114 et non les parties planes 116.

## Revendications

1. Dispositif d'imagerie (100) configuré pour imager un échantillon (102), comprenant au moins :
- une première source lumineuse (104) configurée pour émettre une lumière ;
- un dispositif de déflection lumineuse configuré pour défléchir la lumière destinée à être émise par la première source lumineuse (104) vers l'échantillon (102), comprenant une portion de matériau (106) dotée d'une première face principale (108) destinée à être disposée en regard de l'échantillon (102), d'une deuxième face principale (110) opposée à la première face principale (108), et d'une première face latérale (112) vers laquelle la lumière est destinée à être émise par la première source lumineuse (104) ;
l'une des première et deuxième faces principales (108, 110) étant dotée de parties obliques (114) vis-à-vis de l'autre des première et deuxième faces principales (108, 110) et chacune configurée pour défléchir une partie de la lumière reçue vers l'échantillon (102), et de parties planes (116) parallèles à l'autre des première et deuxièmes faces principales (108, 110) et configurées pour laisser passer la lumière rétrodiffusée par l'échantillon (102) ;
- un imageur (118) comprenant une pluralité de pixels (120) et présentant une face de détection (122) disposée en regard de la deuxième face principale (110) du dispositif de déflection lumineuse et destinée à recevoir la lumière rétrodiffusée par l'échantillon (102) ;
**caractérisé en ce que** chaque pixel (120) de l'imageur (118) est disposé en regard d'une des parties planes (116) de ladite une des première et deuxième faces principales (108, 110).

2. Dispositif d'imagerie (100) selon la revendication 1, dans lequel:
- ladite une des première et deuxième faces principales (108, 110) correspond à la deuxième face principale (110) ;
- la lumière destinée à être émise par la première source lumineuse (104) est destinée à entrer dans la portion de matériau (106) du dispositif de déflection lumineuse par la première face latérale (112) ;
- la portion de matériau (106) du dispositif de déflection lumineuse comporte un matériau dont l'indice de réfraction n1 est supérieur à l'indice de réfraction n2 du milieu dans lequel se trouve ladite portion de matériau (106).

3. Dispositif d'imagerie (100) selon la revendication 2, comportant en outre un collimateur (111) interposé entre la première source lumineuse (104) et la première face latérale (112) du dispositif de déflection lumineuse.

4. Dispositif d'imagerie (100) selon la revendication 1, dans lequel:
- ladite une des première et deuxième faces principales (108, 110) correspond à la première face principale (108) ;
- la portion de matériau (106) du dispositif de déflection lumineuse comporte un matériau dont l'indice de réfraction n1 est supérieur à l'indice de réfraction n2 du milieu dans lequel se trouve ladite portion de matériau (106) ;
- les parties obliques (114) de ladite une des première et deuxième faces principales (108) sont recouvertes d'un matériau réfléchissant vis-à-vis de la lumière destinée à être émise par la première source lumineuse (104).

5. Dispositif d'imagerie (100) selon l'une des revendications précédentes, dans lequel les parties obliques (114) de ladite une des première et deuxième faces principales (108, 110) forment des bandes parallèles espacées les unes des autres par les parties planes (116).

6. Dispositif d'imagerie (100) selon l'une des revendications 1 à 4, dans lequel les parties obliques (114) sont disposées en quinconce et espacées les unes des autres par les parties planes (116).

7. Dispositif d'imagerie (100) selon l'une des revendications 1 à 4, dans lequel les parties obliques (114) forment des cercles concentriques ou des rectangles concentriques espacés les uns des autres par les parties planes (116).

8. Dispositif d'imagerie (100) selon l'une des revendications précédentes, comportant en outre une deuxième source lumineuse (124) configurée pour émettre une lumière similaire à celle émise par la première source lumineuse (104), dans lequel la portion de matériau (106) est dotée d'une deuxième face latérale (126) opposée à la première face latérale (112) et vers laquelle la deuxième source lumineuse (124) est destinée à émettre sa lumière, et dans lequel la portion de matériau (106) est symétrique par rapport à un plan perpendiculaire à l'autre des première et deuxième faces principales (108, 110).

9. Dispositif d'imagerie (100) selon l'une des revendications précédentes, dans lequel la portion de matériau (106) comporte au moins l'un des matériaux suivants : germanium, silicium non dopé, ZnSe, ZnS, CaF₂, verre de chalcogénure.

10. Dispositif d'imagerie (100) selon l'une des revendications précédentes, dans lequel les parties planes (116) de ladite une des première et deuxième faces principales (108, 110) et/ou l'autre des première et deuxième faces principales (108, 110) sont recouvertes d'un matériau antireflet (126).

11. Dispositif d'imagerie (100) selon l'une des revendications précédentes, dans lequel les parties obliques (114) sont courbées.

12. Procédé de réalisation d'un dispositif d'imagerie (100) configuré pour imager un échantillon (102), comprenant au moins :
- fourniture d'une première source lumineuse (104) configurée pour émettre une lumière ;
- réalisation d'un dispositif de déflection lumineuse configuré pour défléchir la lumière destinée à être émise par la première source lumineuse (104) vers l'échantillon (102), comprenant une portion de matériau (106) doté d'une première face principale (108) destinée à être disposée en regard de l'échantillon (102), d'une deuxième face principale (110) opposée à la première face principale (108), et d'une première face latérale (112) vers laquelle la lumière est destinée à être émise par la première source lumineuse (104) ; la réalisation du dispositif de déflection lumineuse incluant la réalisation, au niveau de l'une des première et deuxième faces principales (108, 110), de parties obliques (114) vis-à-vis de l'autre des première et deuxième faces principales (108, 110) et chacune configurée pour défléchir une partie de la lumière reçue vers l'échantillon (102), et de parties planes (116) parallèles à l'autre des première et deuxièmes faces principales (108, 110) et configurées pour laisser passer la lumière rétrodiffusée par l'échantillon (102) ;
- fourniture d'un imageur (118) comprenant une pluralité de pixels (120) et présentant une face de détection (122) disposée en regard de la deuxième face principale (110) et destinée à recevoir la lumière rétrodiffusée par l'échantillon (102) ;
**caractérisé en ce que** chaque pixel (120) de l'imageur (118) est disposé en regard d'une des parties planes (116) de ladite une des première et deuxième faces principales (108, 110).

13. Procédé selon la revendication 12, dans lequel la réalisation des parties obliques (114) et des parties planes (116) de la portion de matériau (106) du dispositif de déflection lumineuse comporte la mise en œuvre d'une gravure par laser de la portion de matériau (106).

## Patentansprüche

1. Bildgebungsvorrichtung (100), die so eingerichtet ist, dass sie eine Probe (102) abbildet, umfassend mindestens:
- eine erste Lichtquelle (104), die so eingerichtet ist, dass sie Licht ausgibt;
- eine Lichtumlenkvorrichtung, die so eingerichtet ist, dass sie das Licht, das von der ersten Lichtquelle (104) zur Probe (102) ausgegeben werden soll, umlenkt, umfassend einen Materialabschnitt (106), der eine erste Hauptfläche (108) aufweist, die gegenüber der Probe (102) angeordnet sein soll, eine zweite Hauptfläche (110), die der ersten Hauptfläche (108) gegenüberliegt, und eine erste Seitenfläche (112) in die das Licht von der ersten Lichtquelle (104) ausgegeben werden soll;
wobei eine der ersten und zweiten Hauptflächen (108, 110) mit schrägen Teilen (114) gegenüber der anderen der ersten und zweiten Hauptflächen (108, 110) versehen ist, die jeweils so eingerichtet sind, dass sie einen Teil des empfangenen Lichts zur Probe (102) umlenken, und flache Teile (116) parallel zur anderen der ersten und zweiten Hauptflächen (108, 110) sind und so eingerichtet sind, dass sie das durch die Probe (102) zurückgestreute Licht durchlassen;
- einen Bildgeber (118), der eine Vielzahl von Pixel (120) umfasst und eine Erkennungsfläche (122) aufweist, die gegenüber der zweiten Hauptfläche (110) der Lichtumlenkvorrichtung angeordnet ist und dazu bestimmt ist, das von der Probe (102) zurückgestreute Licht aufzunehmen;
**dadurch gekennzeichnet, dass** jedes Pixel (120) des Bildgebers (118) gegenüber einem der flachen Teile (116) der ersten und zweiten Hauptfläche (108, 110) angeordnet ist.

2. Bildgebungsvorrichtung (100) nach Anspruch 1, wobei:
- die eine der ersten und zweiten Hauptflächen (108, 110) der zweiten Hauptfläche (110) entspricht;
- das von der ersten Lichtquelle (104) auszugebende Licht dazu bestimmt ist, von der ersten Seitenfläche (112) in den Materialabschnitt (106) der Lichtumlenkvorrichtung einzutreten;
- der Materialabschnitt (106) der Lichtumlenkvorrichtung ein Material aufweist, dessen Brechungsindex n1 höher ist als der Brechungsindex n2 des Mediums, in dem sich der Materialabschnitt (106) befindet.

3. Bildgebungsvorrichtung (100) nach Anspruch 2, ferner umfassend einen Kollimator (111), der zwischen der ersten Lichtquelle (104) und der ersten Seitenfläche (112) der Lichtumlenkvorrichtung angeordnet ist.

4. Bildgebungsvorrichtung (100) nach Anspruch 1, wobei:
- eine der ersten und zweiten Hauptflächen (108, 110) der ersten Hauptfläche (108) entspricht;
- der Materialabschnitt (106) der Lichtumlenkvorrichtung ein Material enthält, dessen Brechungsindex n1 höher ist als der Brechungsindex n2 des Mediums, in dem sich der Materialabschnitt (106) befindet;
- die schrägen Teile (114) der ersten und zweiten Hauptfläche (108) mit einem gegenüber dem von der ersten Lichtquelle (104) auszugebenden Licht reflektierenden Material bedeckt sind.

5. Bildgebungsvorrichtung (100) nach einem der vorhergehenden Ansprüche, wobei die schrägen Teile (114) der ersten und zweiten Hauptfläche (108, 110) parallele Streifen bilden, die von den flachen Teilen (116) voneinander beabstandet sind.

6. Bildgebungsvorrichtung (100) nach einem der Ansprüche 1 bis 4, wobei die schrägen Teile (114) versetzt angeordnet und von den flachen Teilen (116) voneinander beabstandet sind.

7. Bildgebungsvorrichtung (100) nach einem der Ansprüche 1 bis 4, wobei die schrägen Teile (114) konzentrische Kreise oder konzentrische Rechtecke bilden, die von den flachen Teilen (116) voneinander beabstandet sind.

8. Bildgebungsvorrichtung (100) nach einem der vorhergehenden Ansprüche, ferner eine zweite Lichtquelle (124) umfassend, die so eingerichtet ist, dass sie Licht ausgibt, das dem von der ersten Lichtquelle (104) ausgegebenen Licht ähnelt, wobei der Materialabschnitt (106) eine zweite, der ersten Seitenfläche (112) gegenüberliegende Seitenfläche (126) aufweist und zu der die zweite Lichtquelle (124) ihr Licht ausgeben soll, und wobei der Materialabschnitt (106) symmetrisch zu einer zur anderen der ersten und zweiten Hauptfläche (108, 110) senkrechten Ebene ist.

9. Bildgebungsvorrichtung (100) nach einem der vorhergehenden Ansprüche, wobei der Materialabschnitt (106) mindestens eines der folgenden Materialien aufweist: Germanium, undotiertes Silizium, ZnSe, ZnS, CaF2, Chalkogenidglas.

10. Bildgebungsvorrichtung (100) nach einem der vorhergehenden Ansprüche, wobei die flachen Teile (116) der ersten und zweiten Hauptfläche (108, 110) und/oder der anderen der ersten und zweiten Hauptfläche (108, 110) mit einem entspiegelten Material (126) bedeckt sind.

11. Bildgebungsvorrichtung (100) nach einem der vorhergehenden Ansprüche, wobei die schrägen Teile (114) gekrümmt sind.

12. Verfahren zur Herstellung einer Bildgebungsvorrichtung (100), die so eingerichtet ist, dass sie eine Probe (102) abbildet, umfassend mindestens:
- Bereitstellung einer ersten Lichtquelle (104), die so eingerichtet ist, dass sie Licht ausgibt;
- Herstellung einer Lichtumlenkvorrichtung, die so eingerichtet ist, dass sie das Licht, das von der ersten Lichtquelle (104) zur Probe (102) ausgegeben werden soll, umlenkt, umfassend einen Materialabschnitt (106) mit einer ersten Hauptfläche (108), die gegenüber der Probe (102) angeordnet sein soll, einer zweiten Hauptfläche (110), die der ersten Hauptfläche (108) gegenüberliegt, und einer ersten Seitenfläche (112) in die das Licht von der ersten Lichtquelle (104) ausgegeben werden soll;
die Herstellung der Lichtumlenkvorrichtung, einschließlich der Herstellung, an einer der ersten und zweiten Hauptflächen (108, 110), von schrägen Teilen (114) gegenüber der anderen der ersten und zweiten Hauptflächen (108, 110), die jeweils so eingerichtet sind, dass sie einen Teil des empfangenen Lichts zur Probe (102) umlenken, und von flachen Teilen (116) parallel zur anderen der ersten und zweiten Hauptflächen (108, 110) und so eingerichtet sind, dass sie das zurückgestreute Licht durch die Probe (102) hindurchlassen;
- Bereitstellung eines Bildgebers (118), der eine Vielzahl von Pixel (120) umfasst und eine Erkennungsfläche (122) aufweist, die gegenüber der zweiten Hauptfläche (110) angeordnet ist und das von der Probe (102) zurückgestreute Licht aufnehmen soll;
**dadurch gekennzeichnet, dass** jedes Pixel (120) des Bildgebers (118) gegenüber einem der flachen Teile (116) der ersten und zweiten Hauptfläche (108, 110) angeordnet ist.

13. Verfahren nach Anspruch 12, wobei die Herstellung der schrägen Teile (114) und der flachen Teile (116) des Materialabschnitts (106) der Lichtumlenkvorrichtung die Durchführung einer Lasergravur des Materialabschnitts (106) umfasst.

## Claims

1. An imaging device (100) configured to image a sample (102), comprising at least:
- a first light source (104) configured to emit a light;
- a light deflection device configured to deflect the light intended to be emitted by the first light source (104) towards the sample (102), comprising a material portion (106) provided with a first main face (108) intended to be arranged opposite the sample (102), a second main face (110) opposite to the first main face (108), and a first lateral face (112) towards which the light is intended to be emitted by the first light source (104);
one amongst the first and second main faces (108, 110) being provided with oblique portions (114) with respect to the other one amongst the first and second main faces (108, 110) and each configured to deflect a portion of the received light towards the sample (102), and with planar portions (116) parallel to the other one amongst the first and second main faces (108, 110) and configured to let the light backscattered by the sample (102) pass;
- an imager (118) comprising a plurality of pixels (120) and having a detection face (122) arranged opposite the second main face (110) of the light deflection device and intended to receive the light backscattered by the sample (102);
**characterised in that** each pixel (120) of the imager (118) is arranged opposite one of the planar portions (116) of said one amongst the first and second main faces (108, 110).

2. The imaging device (100) according to claim 1, wherein:
- said one amongst the first and second main faces (108, 110) corresponds to the second main face (110);
- the light intended to be emitted by the first light source (104) is intended to enter the material portion (106) of the light deflection device via the first lateral face (112);
- the material portion (106) of the light deflection device includes a material whose refractive index n1 is higher than the refractive index n2 of the medium in which said material portion (106) is located.

3. The imaging device (100) according to claim 2, further including a collimator (111) interposed between the first light source (104) and the first lateral face (112) of the light deflection device.

4. The imaging device (100) according to claim 1, wherein:
- said one amongst the first and second main faces (108, 110) corresponds to the first main face (108);
- the material portion (106) of the light deflection device includes a material whose refractive index n1 is higher than the refractive index n2 of the medium in which said material portion (106) is located.
- the oblique portions (114) of said one amongst the first and second main faces (108) are covered by a material that reflects the light intended to be emitted by the first light source (104).

5. The imaging device (100) according to one of the preceding claims, wherein the oblique portions (114) of said one amongst the first and second main faces (108, 110) form parallel strips spaced apart from each other by the planar portions (116).

6. The imaging device (100) according to one of claims 1 to 4, wherein the oblique portions (114) are arranged in a staggered manner and spaced apart from each other by the planar portions (116).

7. The imaging device (100) according to one of claims 1 to 4, wherein the oblique portions (114) form concentric circles or concentric rectangles spaced apart from each other by the planar portions (116).

8. The imaging device (100) according to one of the preceding claims, further including a second light source (124) configured to emit a light similar to that emitted by the first light source (104), wherein the material portion (106) is provided with a second lateral face (126) opposite to the first lateral face (112) and towards which the second light source (124) is intended to emit its light, and wherein the material portion (106) is symmetrical with respect to a plane perpendicular to the other one amongst the first and second main faces (108, 110).

9. The imaging device (100) according to one of the preceding claims, wherein the material portion (106) includes at least one of the following materials: germanium, undoped silicon, ZnSe, ZnS, CaF₂, chalcogenide glass.

10. The imaging device (100) according to one of the preceding claims, wherein the planar portions (116) of said one amongst the first and second main faces (108, 110) and/or the other one amongst the first and second main faces (108, 110) are covered by an antireflective material (126).

11. The imaging device (100) according to one of the preceding claims, wherein the oblique portions (114) are curved.

12. A method for making an imaging device (100) configured o image a sample (102), comprising at least:
- providing a first light source (104) configured to emit a light;
- making a light deflection device configured to deflect the light intended to be emitted by the first light source (104) towards the sample (102), comprising a material portion (106) provided with a first main face (108) intended to be arranged opposite the sample (102), a second main face (110) opposite to the first main face (108), and a first lateral face (112) towards which the light is intended to be emitted by the first light source (104);
the making of the light deflection device including making, at one amongst the first and second main faces (108, 110), oblique portions (114) with respect to the other one amongst the first and second main faces (108, 110) and each configured to deflect a portion of the received light towards the sample (102), and planar portions (116) parallel to the other one amongst the first and second main faces (108, 110) and configured to let the light backscattered by the sample (102) pass;
- providing an imager (118) comprising a plurality of pixels (120) and having a detection face (122) arranged opposite the second main face (110) and intended to receive the light backscattered by the sample (102);
**characterised in that** each pixel (120) of the imager (118) is arranged opposite one of the planar portions (116) of said one amongst the first and second main faces (108, 110).

13. The method according to claim 12, wherein the making of the oblique portions (114) and of the planar portions (116) of the material portion (106) of the light deflection device includes the implementation of a laser etching of the material portion (106).
